# EUROPEAN PATENT SPECIFICATION

(11) **EP 1 613 091 B1**
(45) Date of publication and mention of the grant of the patent: **26.08.2009**
(21) Application number: 04254021.1
(22) Date of filing: 02.07.2004
(51) Int. Cl.: H04N 7/26

(54) **Intra-frame prediction for high-pass temporal-filtered frames in wavelet video coding**
Intra-Bildprädiktion für zeitlich Hochpass gefilterte Bilder in Wavelet-Videokodierung
Prédiction intra-trame pour des trames filtrées passe-haut temporellement dans le codage vidéo par ondelettes

(43) Date of publication of application: 04.01.2006
(73) Proprietor: Mitsubishi Electric Information Technology Centre Europe B.V., Guildford, Surrey GU2 5YD (GB); MITSUBISHI DENKI KABUSHIKI KAISHA, Chiyoda-ku Tokyo 100-8310 (JP)
(72) Inventor: Cieplinski, L., Guildford, Surrey GU1 2UF (GB); Caball, J., Barcelona 08003 (ES); Ghanbari, S., Guildford, Surrey GU1 1HS (GB)
(74) Representative: Picker, Madeline Margaret

(56) References cited:
- WO-A-03/049452
- YONGJUN WU ET AL: "Directional spatial I-blocks for the MC-EZBC video coder" ACOUSTICS, SPEECH, AND SIGNAL PROCESSING, 2004. PROCEEDINGS. (ICASSP '04). IEEE INTERNATIONAL CONFERENCE ON MONTREAL, QUEBEC, CANADA 17-21 MAY 2004, PISCATAWAY, NJ, USA,IEEE, 17 May 2004 (2004-05-17), pages 129-132, XP010718143 ISBN: 0-7803-8484-9
- WIEGAND T ET AL: "OVERVIEW OF THE H.264/AVC VIDEO CODING STANDARD" IEEE TRANSACTIONS ON CIRCUITS AND SYSTEMS FOR VIDEO TECHNOLOGY, IEEE INC. NEW YORK, US, vol. 13, no. 7, July 2003 (2003-07), pages 560-576, XP001169882 ISSN: 1051-8215
- OHM J-R: "THREE-DIMENSIONAL SUBBAND CODING WITH MOTION COMPENSATION" IEEE TRANSACTIONS ON IMAGE PROCESSING, IEEE INC. NEW YORK, US, vol. 3, no. 5, 1 September 1994 (1994-09-01), pages 559-571, XP000476832 ISSN: 1057-7149
- RICHARDSON IAIN E G: "H.264/MPEG-4 part 10: Intra Prediction" H.264/MPEG-4 PART 10: INTRA PREDICTION, 7 October 2002 (2002-10-07), pages 1-7, XP002973807
- RICHARDSON IAIN E G: "H.264/MPEG-4 part 10 tutorials, switching P and I slices" H.264/MPEG-4 PART 10 TUTORIALS, SWITCHING P AND I SLICES, 31 January 2003 (2003-01-31), pages 1-41, XP002952897
- "THE STATUS OF INTERFRAME WAVELET CODING EXPLORATION IN MPEG" INTERNATIONAL STANDARD ISO/IEC, May 2002 (2002-05), page COMPLETE, XP001089884
- HYUN DUK CHO ET AL: "3-D MEDICAL IMAGE COMPRESSION USING AN ADAPTIVE MODE SELECTION TECHNIQUE IN WAVELET TRANSFORM DOMAIN" PROCEEDINGS OF THE PICTURE CODING SYMPOSIUM, 21 April 1999 (1999-04-21), pages 91-94, XP008005041

## Description

The invention relates to encoding and decoding of a video sequence using 3-D (t+2D or 2D+t) wavelet coding. More specifically, we propose an improved method of performing intra-frame prediction for parts (blocks) of a high-pass frame generated during the temporal decomposition.

The papers "Three-Dimensional Subband Coding with Motion Compensation" by Jens-Rainer Ohm and "Motion-Compensated 3-D Subband Coding of Video" by Choi and Woods are background references describing 3-D subband coding. Briefly, a sequence of images, such as a Group of Pictures (GOP), in a video sequence, are decomposed into spatiotemporal subbands by motion compensated (MC) temporal analysis followed by a spatial wavelet transform. In alternative approaches, the temporal and spatial analysis steps may be reversed. The resulting subband coefficients are further encoded for transmission.

A well known problem in motion-compensated wavelet video coding occurs when temporal filtering cannot be performed due to either complete failure or unsatisfactory quality of motion estimation for a particular region/block of a frame. In the prior art this problem was solved by not applying temporal filtering in the generation of low-pass frame and still performing motion-compensated prediction for the generation of high-pass frames. The problem with the latter is that the resulting block in the high-pass frame tends to have relatively high energy (high value coefficients) which has a negative effect on further compression steps. In a previous patent application (EP Appl. No. 03255624.3), we introduced the idea of using intra-frame prediction for improved generation for the problem blocks of high-pass frames. In that invention, the blocks are predicted not from the temporally neighbouring frame but from the spatial neighbourhood of the current frame. Different prediction modes can be employed, several of which are described in the above-mentioned patent application.

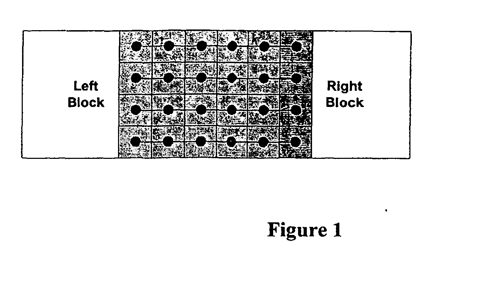

Most video coding systems that use intra-frame prediction (e.g. MPEG-4 part 10/H.264) restrict the prediction to be performed using the previously processed blocks in the block scanning order (ie causal). This restriction is not always necessary in case of wavelet-based coding. This is discussed in the above-mentioned application and further explored in the paper entitled "Directional Spatial I-blocks for MC-EZBC Video Coder" by Woods and Wu (ICASSP 2004, May 2004, previously presented to MPEG in December 2003). A novel element in this paper is the use of interpolation as well as prediction for formation of high-pass frame blocks. An example of such interpolation is shown in Figure 1, where interpolation between the block on the left and the block on the right of the current block is employed.

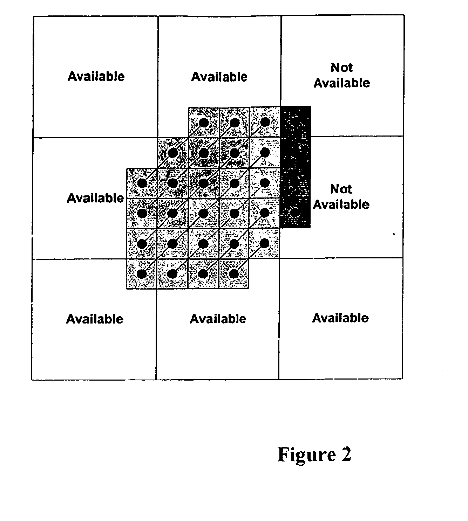

For the prediction/interpolation directions other than horizontal and vertical, the situation gets more complicated and the number of blocks that need to be used may be significantly higher. This is illustrated in Figure 2, which also shows that in this case a part of the block (lighter grey) is predicted rather than interpolated due to non-availability of some of the blocks on the right hand side of the candidate block.

As discussed in the paper, the use of non-causal directions in prediction and interpolation requires careful consideration of the availability of the blocks to avoid a situation where e.g. two blocks are predicted from each other and to ensure consistency between encoder and decoder. Taking into account the scanning direction of an image (usually left to right and top to bottom), the use of causal directions means use of the information that is already known as a result of the scanning. The solution proposed in the paper is to employ a *two-sweep* procedure:
1. In the first sweep only the DEFAULT mode non-causal blocks (i.e. blocks for which motion estimation is considered to have been successful) are used as predictors. The MSE resulting from intra-frame prediction is compared to that for motion compensation and the blocks for which intra-frame prediction results in lower MSE are marked as intra-predicted.
2. In the second sweep, all the non-causal blocks that were not marked as intra predicted in the first step are used for predictors. This means that more neighbours can be used for prediction/interpolation of the intra-predicted blocks, which tends to decrease the MSE of the high-pass block.

The techniques described above have a number of problems. One of them is the propagation of quantisation errors when intra-frame prediction is repeatedly performed using intra-predicted blocks. Another problem is sub-optimality of the two-sweep prediction process employed by Woods and Wu. In the first sweep of that algorithm, all the non-DEFAULT blocks are prevented from being used as predictors even though some of them will not be intra-predicted.

Aspects of the invention are set out in the accompanying claims.

The first of the above-mentioned problems is solved by employing "block restriction": we do not allow an intra-frame predicted block to be used again for prediction. In Woods and Wu, candidates for I-blocks are not available for interpolation/prediction in the first sweep, and these include P-BLOCKs and REVERSE blocks. They only apply this restriction to non-causal blocks and in a way which does not prevent error propagation.

We also devised an improved three-pass mode selection algorithm that relies on "block restriction". With this restriction in place, it is possible to allow more blocks in the first pass of mode selection and only partially restrict their number in the second pass. The third pass is then used in a similar fashion to second pass above to ensure consistency between encoder and decoder.

Embodiments of the invention will be described with reference to the accompanying drawings of which:
Fig. 1 is a diagram illustrating intra-frame interpolation in the horizontal direction;
Fig. 2 is a diagram illustrating intra-frame interpolation in a diagonal direction;
Fig. 3 is a diagram illustrating a third stage in a method of an embodiment;
Fig. 4 is a diagram illustrating modified interpolation on a diagonal;
Fig. 5 is a diagram illustrating whole block prediction;
Fig. 6 is a diagram illustrating whole-block interpolation;
Fig. 7 is a block diagram illustrating a coding system.

The techniques of the present invention are based on the prior art techniques such as described in the prior art documents mentioned above.

In a first method ("block restriction"), while the current block is being processed, only intra-frame prediction/interpolation modes are attempted which do not involve using intra-predicted blocks as predictors. This restriction is applicable to the prediction that only involves causal directions (where no multiple-pass processing is needed) as well as when non-causal directions are in use.

A second method is a three-pass mode selection algorithm that also uses "block restriction".

The algorithm can be outlined as follows:
1. In the first mode selection pass, the "block restriction" is switched off, and we identify all the blocks that could benefit from intra prediction without any restrictions on whether predictor blocks are themselves intra predicted or not. This means that some blocks identified here would not be possible to decode properly (e.g. two blocks can be used to predict each other). We will refer to this set of problems as "mutual prediction" in the following.
2. In the second pass, "block restriction" is switched on and the candidates identified in the previous pass are re-evaluated. The use of "block restriction" ensures that the resulting set of intra-predicted blocks is useable (i.e. no problems like the mutual prediction mentioned in point 1 persist). This is similar to first sweep in Woods and Wu with the crucial distinction that the restriction is only applied to the blocks identified as potential intra-frame predicted blocks in step one, thus allowing a higher number of blocks to be used.
3. In the third pass, the high-pass frame portions corresponding to intra-frame predicted blocks are recalculated, this time using the final block modes resulting from the second pass. This pass is necessary to ensure the consistency between the encoder and decoder.

In step 1, candidate blocks for intra prediction are identified for example using a technique such as in the prior art eg the prior art mentioned above. These candidate blocks may then be intra predicted/interpolated using all neighbouring blocks. The intra-predicted block is then evaluated, for example, using MSE or MAD (mean squared error or mean absolute difference), to determine if the error is less than using motion compensation. If intra-prediction is better than motion compensation, then the block is identified as a block that could benefit from intra prediction in step 1.

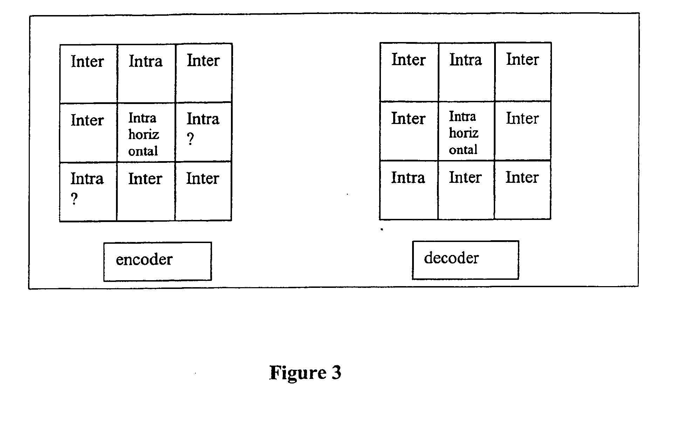

The third pass is preferable because, while the decoder has the full information about exactly which blocks were intra-predicted and are therefore not available as predictors, the second-pass encoder will sometimes have to assume that a block is not available even though it becomes available later. An example is given in Fig. 3.

In this example, the block in the middle uses intra-frame interpolation/prediction in the horizontal direction. In the second pass of the encoder mode selection, the block on the right has not been processed yet, and based on the MSE comparison from the first pass is marked as potentially intra-predicted and therefore cannot be used for prediction/interpolation of the current block. It may, however turn out that it will not be intra-predicted due to the block restriction used in the second pass. The process for forming the high pass coefficient for this block will therefore be different in the decoder than the one used in the encoder, which will result in the discrepancy of the reconstructed frame.

Further embodiments and variations of the above embodiments are described below. The variations and embodiments may be combined where appropriate.

In some circumstances the use of the interpolation may be undesirable. One reason for this is the additional computational and memory overhead discussed earlier. It is also possible that the content of a particular frame or group of frames may favour prediction. To address this problem, we propose to switch between the interpolation and prediction mode on a per-frame or per-sequence basis. This could be done by introducing a signalling mechanism at the appropriate level (e.g. frame, Group of Pictures, sequence) to inform the decoder which variation is in use.

It is also possible that for a particular frame or even a block, the interpolation may not improve performance compared to prediction, especially when the additional restrictions on the allowed directions are taken into account. To address the latter problem, we propose switching on a per-block basis, without explicit signalling. In the first solution, we only use interpolation if it can be applied for the entire block (see Figure 2 for an example of when it is not possible), otherwise we use prediction for the entire block. Another solution is to modify the mode decision process to use an additional measure of uniformity of prediction error (such as maximum absolute difference) in addition to the typically used mean absolute or square error. This helps particularly with visual quality as it avoids introducing sharp edges within blocks.

Another solution, which involves implicit signalling, is to introduce three separate block modes for each direction: one for interpolation and two for predictions. The selection among these three modes is based on the minimisation of the value of the error measure, in a similar fashion to intra/inter mode decision.

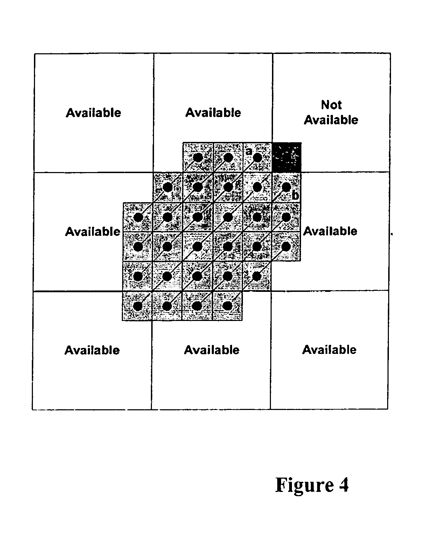

For directions other than horizontal and vertical, we are quite often forced to apply prediction for the diagonal line even though the remainder of the block can be interpolated. To resolve this problem, we propose to use a combination of the available pixels in place of the missing single pixel on the diagonal. This is illustrated in Figure 4, where the average of pixels *a* and *b* is used in place of pixel *x*.

A similar idea to the second pass described above is applicable to the non-interpolation case, where it could form the basis of the single pass operation. In that case, there is no problem of mutual prediction, but we have observed that using previously intra-predicted blocks as the basis for further intra prediction tends to result in excessive error propagation, which in turn leads to significant performance deterioration. More precisely, the "block restriction" can be applied in the case of causal-direction prediction, to prevent error propagation within frame.

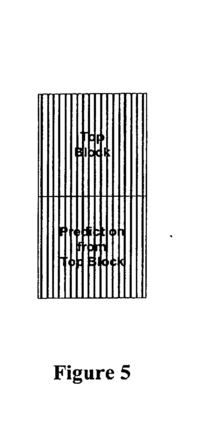

In the case of causal-only prediction, the use of whole block of pixels as predictor, as illustrated in Figure 5, often leads to better performance than the use of a single line.

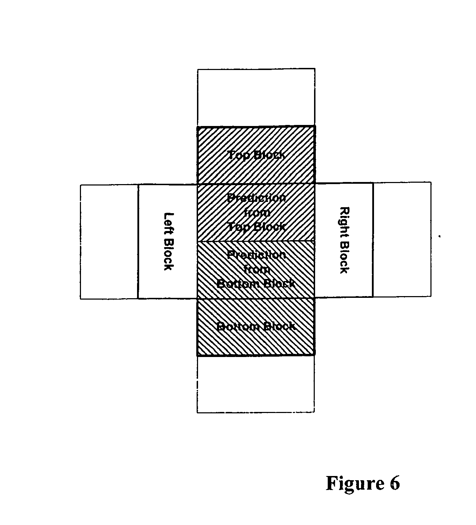

One possible explanation of this phenomenon is that the effects of quantisation error propagation may be less pronounced when the same pixel is not used for prediction of multiple pixels. A combination of the whole block prediction and interpolation approach is also possible, where two neighbouring blocks can be used as candidates for predicting an intra block. An example of such prediction is shown in Figure 6, where the first half of the prediction is from the bottom half of the top block and the second half of the prediction is from the top half of the bottom block.

Another conclusion that can be drawn from the observed good performance of whole block prediction is that the use of whole block as predictor should tend to restrict the intra-frame prediction to areas of more uniform texture. We therefore propose to modify the mode selection criterion for the "line-based" prediction/interpolation to include a measure of smoothness of the relevant area around the block for which the intra-frame prediction is performed. This can be implemented by calculating the variance of the pixel values in the area of the predicted block and the block that would be used for whole-block prediction.

The mode selection criterion could be adapted to take into consideration the temporal decomposition level at which the high-pass frame under consideration is being formed. We have performed some experiments where we introduced a bias to the comparison of prediction error of inter-frame and intra-frame prediction depending on the temporal level. The results obtained suggest a slight improvement in performance when intra-frame prediction modes are favoured more at the deeper decomposition levels.

Another way to exploit the dependence on the temporal decomposition level is by adjusting the entropy coding of the block mode decisions. It has been found that the intra-prediction modes occur much more frequently at the lower decomposition levels and therefore it should be possible to improve coding efficiency through appropriate changes in the design of variable length codes, i.e. assigning shorter codes to intra prediction modes at deeper temporal decomposition levels. This approach could work if, for example, a higher total number of block modes is used.

The impact of quantisation error is increased if a single pixel is used to predict several blocks in the intra predicted block. Thus, the selection of the pixels to be used as predictors preferably takes into account the number of pixels predicted from a single predictor pixel.

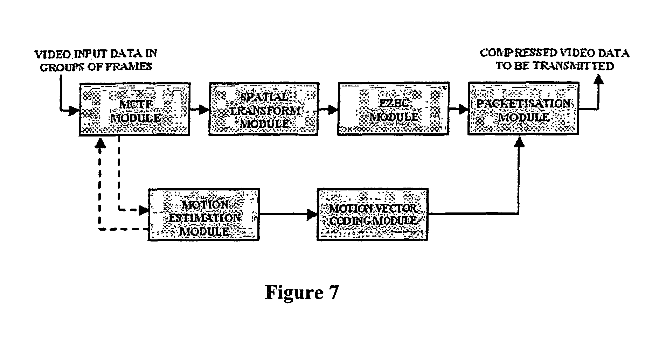

The invention can be implemented using a system similar to a prior art system with suitable modifications. For example, the basic components of a coding system may be as shown in Fig. 7 except that the MCTF (motion compensation temporal filtering) module is modified to execute processing as in the above-described embodiments.

In this specification, the term "frame" is used to describe an image unit, including after filtering, but the term also applies to other similar terminology such as image, field, picture, or sub-units or regions of an image, frame etc. The terms pixels and blocks or groups of pixels may be used interchangeably where appropriate. In the specification, the term image means a whole image or a region of an image, except where apparent from the context. Similarly, a region of an image can mean the whole image. An image includes a frame or a field, and relates to a still image or an image in a sequence of images such as a film or video, or in a related group of images.

The image may be a grayscale or colour image, or another type of multispectral image, for example, IR, UV or other electromagnetic image, or an acoustic image etc.

Except where apparent from the context or as understood by the skilled person, intra-frame prediction can mean interpolation and vice versa, and prediction/interpolation means prediction or interpolation or both, so that an embodiment of the invention may involve only prediction or only interpolation, or a combination of predication and interpolation (for intra-coding), as well as motion compensation/inter-frame coding, and a block can mean a pixel or pixels from a block.

The invention can be implemented for example in a computer system, with suitable software and/or hardware modifications. For example, the invention can be implemented using a computer or similar having control or processing means such as a processor or control device, data storage means, including image storage means, such as memory, magnetic storage, CD, DVD etc, data output means such as a display or monitor or printer, data input means such as a keyboard, and image input means such as a scanner, or any combination of such components together with additional components. Aspects of the invention can be provided in software and/or hardware form, or in an application-specific apparatus or application-specific modules can be provided, such as chips. Components of a system in an apparatus according to an embodiment of the invention may be provided remotely from other components, for example, over the internet. A coder is shown in Fig.7 and a corresponding decoder has, for example, corresponding components for performing the inverse decoding operations.

Other types of 3-D decomposition and transforms may be used. For example, the invention could be applied in a decomposition scheme in which spatial filtering is performed first and temporal filtering afterwards.

## Claims

1. A method of encoding a video sequence of frames using 3-D decomposition including temporal filtering and using intra-frame prediction and/or interpolation, the method comprising:
(a) a first stage involving carrying out intra-frame prediction and/or interpolation for blocks in a frame, in which, for each block, any of the blocks neighbouring said block may be used in the intra-frame prediction and/or interpolation;
(b) evaluating the results of intra-frame prediction and/or interpolation of step (a) for each block to identify blocks for which intra-frame prediction and/or interpolation may be beneficial;
(c) a second stage involving carrying out intra-frame prediction and/or interpolation for blocks in a frame, wherein blocks identified in step (b) are not used for intra-frame prediction and/or interpolation of other blocks.

2. The method of claim 1 wherein in step (c) in the intra-frame prediction and/or interpolation for a block, any neighbouring blocks may be used except for the blocks identified in step (b).

3. The method of claim 1 or claim 2 further comprising:
(d) evaluating the results of intra-frame prediction and/or interpolation of step (c) to identify blocks for which intra-frame prediction and/or interpolation may be beneficial; and
(e) a third stage involving intra-frame prediction and/or interpolation for the blocks identified in step (d).

4. The method of any preceding claim wherein the step(s) of evaluating the intra-frame prediction and/or interpolation involves determining if the error is less than using motion compensation.

5. The method of claim 4 using mean squared error or mean absolute difference.

6. Use including, for example, transmission and reception of data encoded using the method of any of claims 1 to 5.

7. Apparatus for encoding a video sequence of frames using 3-D decomposition including temporal filtering and using intra-frame prediction and /or interpolation, comprising:
(a) means for performing a first stage involving carrying out intra-frame prediction and/or interpolation for blocks in a frame, in which, for each block, any of the blocks neighbouring said block may be used in the intra-frame prediction and/or interpolation;
(b) means for evaluating the results of intra-frame prediction and/or interpolation of step (a) for each block to identify blocks for which intra-frame prediction/interpolation may be beneficial;
(c) means for performing a second stage involving carrying out intra-frame prediction and/or interpolation for blocks in a frame, wherein blocks identified in step (b) are not used for intra-frame prediction and/or interpolation of other blocks.

8. A computer-readable storage medium storing a program for executing the method of any of claims 1 to 5.

## Patentansprüche

1. Verfahren zum Kodieren einer Video-Sequenz von Bildern mittels 3D-Dekomposition umfassend zeitliches Filtern und mittels Intra-Bildprädiktion und/oder Interpolation, wobei das Verfahren Folgendes umfasst:
(a) eine erste Stufe umfassend das Ausführen von Intra-Bildprädiktion und/oder Interpolation für Blöcke in einem Bild, in dem für jeden Block ein beliebiger der Blöcke, die an diesen Block angrenzen, in der Intra-Bildprädiktion und/oder Interpolation verwendet werden kann;
(b) das Auswerten der Ergebnisse der Intra-Bildprädiktion und/oder Interpolation von Schritt (a) für jeden Block, um Blöcke zu identifizieren, für die eine Intra-Bildprädiktion und/oder Interpolation vorteilhaft sein kann;
(c) eine zweite Stufe umfassend das Ausführen von Intra-Bildprädiktion und/oder Interpolation für Blöcke in einem Bild, wobei die in Schritt (b) identifizierten Blöcke nicht für die Intra-Bildprädiktion und/oder Interpolation anderer Blöcke verwendet werden.

2. Verfahren nach Anspruch 1, wobei in Schritt (c) in der Intra-Bildprädiktion und/oder Interpolation für einen Block, beliebige angrenzende Blöcke, mit Ausnahme der in Schritt (b) identifizierten Blöcke, verwendet werden können.

3. Verfahren nach Anspruch 1 oder Anspruch 2 ferner umfassend:
(d) das Auswerten der Ergebnisse der Intra-Bildprädiktion und/oder Interpolation von Schritt (c), um Blöcke zu identifizieren, für die eine Intra-Bildprädiktion und/oder Interpolation vorteilhaft wäre; und
(e) eine dritte Stufe umfassend die Intra-Bildprädiktion und/oder Interpolation für die in Schritt (d) identifizierten Blöcke.

4. Verfahren nach einem beliebigen vorherigen Anspruch, wobei der Schritt bzw. die Schritte des Auswertens der Intra-Bildprädiktion und/oder Interpolation das Bestimmen umfasst, ob der Fehler geringer ist als beim Verwenden von Bewegungskompensation.

5. Verfahren nach Anspruch 4, wobei der mittlere quadratische Fehler oder die mittlere absolute Abweichung verwendet wird.

6. Das Verwenden umfassend zum Beispiel die Übertragung und den Empfang von Daten, die mittels des Verfahrens nach einem der Ansprüche 1 bis 5 kodiert werden.

7. Vorrichtung zum Kodieren einer Video-Sequenz von Bildern mittels 3D-Dekomposition umfassend zeitliches Filtern und mittels Intra-Bildprädiktion und/oder Interpolation umfassend:
(a) Mittel zum Durchführen einer ersten Stufe umfassend das Ausführen von Intra-Bildprädiktion und/oder Interpolation für Blöcke in einem Bild, in dem für jeden Block ein beliebiger der Blöcke, die an diesen Block angrenzen, in der Intra-Bildprädiktion und/oder Interpolation verwendet werden kann;
(b) Mittel zum Auswerten der Ergebnisse der Intra-Bildprädiktion und/oder Interpolation von Schritt (a) für jeden Block, um Blöcke zu identifizieren, für die eine Intra-Bildprädiktion/Interpolation vorteilhaft sein kann;
(c) Mittel zum Durchführen einer zweiten Stufe umfassend das Ausführen von Intra-Bildprädiktion und/oder Interpolation für Blöcke in einem Bild, wobei die in Schritt (b) identifizierten Blöcke nicht für die Intra-Bildprädiktion und/oder Interpolation anderer Blöcke verwendet werden.

8. Computer-lesbares Speichermedium, das ein Programm zum Ausführen des Verfahrens nach einem der Ansprüche 1 bis 5 speichert.

## Revendications

1. Procédé de codage d'une séquence vidéo de trames utilisant une décomposition tridimensionnelle (3-D) comprenant un filtrage temporel et utilisant une prévision et / ou une interpolation intra-trame, le procédé comprenant :
(a) une première étape qui implique l'exécution d'une prévision et / ou d'une interpolation intra-trame de blocs dans une trame, dans laquelle, pour chaque bloc, n'importe lequel des blocs voisins dudit bloc peut être utilisé dans la prévision et / ou l'interpolation intra-trame ;
(b) l'évaluation des résultats de la prévision et / ou de l'interpolation intra-trame de l'étape (a) de chaque bloc, de manière à identifier les blocs pour lesquels une prévision et / ou une interpolation intra-trame peuvent être profitables ;
(c) une deuxième étape qui implique l'exécution d'une prévision et / ou d'une interpolation intra-trame de blocs dans une trame, dans laquelle les blocs identifiés dans l'étape (b) ne sont pas utilisés pour une prévision et / ou une interpolation intra-trame des autres blocs.

2. Procédé selon la revendication 1, dans lequel dans l'étape (c) de la prévision et / ou de l'interpolation intra-trame d'un bloc, n'importe lequel des blocs voisins peut être utilisé à l'exception des blocs identifiés dans l'étape (b).

3. Procédé selon la revendication 1 ou la revendication 2, comprenant en outre :
(d) l'évaluation des résultats de la prévision et / ou de l'interpolation intra-trame de l'étape (c) de manière à identifier les blocs pour lesquels une prévision et / ou une interpolation intra-trame peuvent être profitables ; et
(e) une troisième étape qui implique une prévision et / ou une interpolation intra-trame des blocs identifiés dans l'étape (d).

4. Procédé selon l'une quelconque des revendications précédentes, dans lequel la ou les étapes d'évaluation d'une prévision et / ou d'une interpolation intra-trame impliquent une détermination permettant de savoir si l'erreur est moindre que celle que l'on aurait si l'on utilisait une compensation de mouvement.

5. Procédé selon la revendication 4, utilisant une erreur quadratique moyenne ou une différence absolue moyenne.

6. Utilisation comprenant, par exemple, une émission et une réception de données codées en utilisant le procédé selon l'une quelconque des revendications 1 à 5.

7. Appareil de codage d'une séquence vidéo de trames utilisant une décomposition tridimensionnelle (3-D) comprenant un filtrage temporel et utilisant une prévision et / ou une interpolation intra-trame, comprenant :
(a) des moyens destinés à exécuter une première étape qui implique l'exécution d'une prévision et / ou d'une interpolation intra-trame de blocs dans une trame, dans laquelle, pour chaque bloc, n'importe lequel des blocs voisins dudit bloc peut être utilisé dans la prévision et / ou l'interpolation intra-trame ;
(b) des moyens destinés à évaluer les résultats de la prévision et / ou de l'interpolation intra-trame de l'étape (a) de chaque bloc de manière à identifier les blocs pour lesquels une prévision / une interpolation intra-trame peuvent être profitables ;
(c) des moyens destinés à exécuter une deuxième phase qui implique l'exécution d'une prévision et / ou d'une interpolation intra-trame de blocs dans une trame, dans laquelle les blocs identifiés dans l'étape (b) ne sont pas utilisés pour une prévision et / ou une interpolation intra-trame des autres blocs.

8. Support de stockage pouvant être lu par un ordinateur, dans lequel est stocké un programme destiné à exécuter le procédé selon l'une quelconque des revendications 1 à 5.
